# EUROPÄISCHE PATENTSCHRIFT

(11) **EP 2 552 175 B1**
(45) Veröffentlichungstag und Bekanntmachung des Hinweises auf die Patenterteilung: **05.05.2021**
(21) Anmeldenummer: 12175964.1
(22) Anmeldetag: 11.07.2012
(51) Int. Cl.: H05B 6/12

(54) **Kochfeldvorrichtung**
Dispositif de champ de cuisson
Hotplate device

(30) Priorität: 28.07.2011 ES 201131293
(43) Veröffentlichungstag der Anmeldung: 30.01.2013
(73) Patentinhaber: BSH Hausgeräte GmbH, 81739 München (DE)
(72) Erfinder: Franco Gutierrez, Carlos, 50017 Zaragoza (ES); Garcia Jimenez, Jose-Ramon, 50009 Zaragoza (ES); Garcia Martinez, Jose Andres, 50014 Zaragoza (ES); Garde Aranda, Ignacio, 50012 Zaragoza (ES); Llorente Gil, Sergio, 50009 Zaragoza (ES); Lopez Nicolas, Gonzalo, 50001 Zaragoza (ES); Paesa García, David, 50015 Zaragoza (ES); Palacios Tomas, Daniel, 50008 Zaragoza (ES); Sagües Blázquiz, Carlos, 50018 Zaragoza (ES)

(56) Entgegenhaltungen:
- EP-A1- 0 716 560
- WO-A1-2008/101766
- DE-A1-102007 037 881
- JP-A- 2009 011 401
- JP-A- 2009 016 251
- JP-A- 2011 023 188

## Beschreibung

Die Erfindung geht aus von einer Kochfeldvorrichtung nach dem Oberbegriff des Anspruchs 1.

Es sind Kochfelder bekannt, deren Heizelemente entlang einer Richtung beweglich sind Eine Kochfeldvorrichtung gemäß dem Oberbegriff vom Anspruch 1 ist beispielsweise aus JP 2009011401A bekannt.

Die Aufgabe der Erfindung besteht insbesondere darin, eine gattungsgemäße Vorrichtung mit verbesserten Eigenschaften hinsichtlich einer hohen Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einem Grundkörper, zumindest einer ersten Trägereinheit, zumindest einem ersten Heizelement, das an die erste Trägereinheit montiert ist, zumindest einer ersten Aktoreinheit, die dazu vorgesehen ist, zumindest das eine Heizelemente bezüglich der ersten Trägereinheit zu bewegen, und mit einer Steuereinheit.

Des Weiteren beinhaltet die Kochfeldvorrichtung zumindest eine zweite Aktoreinheit aufweist, die dazu vorgesehen ist, zumindest die erste Trägereinheit bezüglich des Grundkörpers zu bewegen. Unter einem "Grundkörper" soll ein Bauteil verstanden werden, das dazu vorgesehen ist, die Komponenten der Kochfeldvorrichtung aufzunehmen. Insbesondere ist der Grundkörper dazu vorgesehen, insbesondere durch seine Form, die Kochfeldvorrichtung zumindest in eine Raumrichtung, insbesondere in fünf Raumrichtungen, zumindest großteils abzugrenzen. Insbesondere ist der Grundkörper als Schale ausgebildet. Unter einer "Trägereinheit" soll eine Einheit verstanden werden, die dazu vorgesehen ist, zumindest ein Heizelement zu tragen. Insbesondere ist die Trägereinheit als Platte oder als Leiste ausgebildet. Unter einem "Heizelement" soll ein Element verstanden werden, das dazu vorgesehen ist, elektrische Energie, insbesondere mit einem Wirkungsgrad größer als 50 %, vorteilhaft größer als 70 %, vorzugsweise größer als 90%, in Wärme und/oder Wärmestrahlung umzuwandeln. Insbesondere ist ein Heizelement dazu vorgesehen, in zumindest einem Betriebsmodus eine Leistung von zumindest 50 W, insbesondere zumindest 200 W, vorteilhaft zumindest 1000 W, vorzugsweise zumindest 2000 W, umzusetzen. Insbesondere beträgt eine von dem Heizelement abgegebene Wärmeleistung maximal einer elektrischen Leistung, die in dieses eingespeist wird. Vorzugsweise ist das Heizelement dazu vorgesehen, auf einer Kochfeldplatte aufgestelltes Gargeschirr, insbesondere Töpfe und/oder Pfannen, zu erwärmen. Vorzugsweise ist das Heizelement in einer Betriebsposition unterhalb der Kochfeldplatte angeordnet. Vorzugsweise weist das Heizelement eine runde, insbesondere kreisrunde, Form auf. Insbesondere weist das Heizelement einen Durchmesser zwischen 15 und 32 cm auf. Insbesondere ist das Heizelement aus mehreren, vorzugsweise konzentrischen Heizteilen gebildet, die insbesondere unabhängig voneinander beheizt werden können. Insbesondere weist das Heizelement eine längliche Form auf. Darunter, dass das Heizelement eine "längliche Form" aufweist, soll insbesondere verstanden werden, dass eine Breite des Heizelements maximal 95 %, insbesondere maximal 85 %, vorteilhaft maximal 75 %, besonders vorteilhaft maximal 55 %, vorzugsweise maximal 35 % einer Länge des Heizelements entspricht. Insbesondere weist das Heizelement zumindest in einer Aufsicht eine ovale, insbesondere eine elliptische und/oder stadionartige Form auf. Weiterhin sind zumindest im Wesentlichen rechteckige Formen denkbar. Unter einer "Länge" des Heizelements soll insbesondere die größte Ausdehnung des Heizelements verstanden werden. Unter einer "Breite" des Heizelements soll insbesondere die größte Ausdehnung des Heizelements in einer Richtung verstanden werden, die zumindest im Wesentlichen senkrecht auf einer Richtung, also einer Längsrichtung, steht, entlang der die Ausdehnung des Heizelements der Länge entspricht und die in einem betriebsbereiten Zustand zumindest im Wesentlichen parallel zu der Kochfeldplatte orientiert ist. Darunter, dass zwei Richtungen "im Wesentlichen parallel" liegen, soll insbesondere verstanden werden, dass zumindest zwei Geraden, die jeweils parallel zu unterschiedlichen der Richtungen sind, einen Winkel einschließen, der kleiner ist als 30°, insbesondere kleiner ist als 15°, vorteilhaft kleiner ist als 5°, vorzugsweise kleiner ist als 1°. Darunter, dass zwei Richtungen "im Wesentlichen senkrecht" aufeinander stehen, soll insbesondere verstanden werden, dass sich zumindest zwei Geraden, die jeweils parallel zu unterschiedlichen der Richtungen sind, in einem Winkel schneiden, der maximal 30°, insbesondere maximal 15°, vorteilhaft maximal 5°, vorzugsweise maximal 1° von 90° abweicht. Insbesondere ist das Heizelement als Induktionsheizelement ausgebildet. Unter einem "Induktionsheizelement" soll insbesondere ein Heizelement verstanden werden, das dazu vorgesehen ist, einen hochfrequenten Wechselstrom, insbesondere einen Wechselstrom mit einer Frequenz zwischen 20 kHz und 100 kHz, in ein magnetisches Wechselfeld zu wandeln, welches dazu vorgesehen ist, durch Induktion und/oder Ummagnetisierungseffekte in einem metallischen, insbesondere ferromagnetischen, Körper, insbesondere in einem Heizkörper und/oder einem Gargeschirr Wärme zu erzeugen. Insbesondere weist ein Induktionsheizelement zumindest einen gewickelten, insbesondere hohlen, Leiter auf. Unter einer "Steuereinheit" soll insbesondere eine elektronische Einheit verstanden werden, die vorzugsweise in einer Steuer- und/oder Regeleinheit einer Kochfeldvorrichtung zumindest teilweise integriert ist und die vorzugsweise dazu vorgesehen ist, zumindest eine Leistungseinstellung des Heizelements und/oder die Aktoreinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter "vorgesehen" soll insbesondere speziell programmiert, ausgelegt und/oder ausgestattet verstanden werden. Unter einer "Aktoreinheit" soll eine Einheit verstanden werden, die zumindest einen Aktor aufweist. Insbesondere ist die Aktoreinheit mit dem Heizelement mechanisch gekoppelt. Vorzugsweise ist die Aktoreinheit dazu vorgesehen, durch Ansteuerung eine Position des Heizelements zu verändern. Insbesondere verändert die Aktoreinheit durch Ansteuerung von der Steuereinheit die Position des Heizelements. Unter einem "Aktor" soll insbesondere ein mechatronisches Bauteil verstanden werden, das dazu vorgesehen ist, elektrische Signale in eine Bewegung, insbesondere in eine Schwenk- und/oder Linearbewegung, umzusetzen. Insbesondere beträgt eine Bewegungsgeschwindigkeit, mit der der Aktor das Heizelement bewegt, mehr als 0,1 m/s, insbesondere mehr als 0,5 m/s, vorteilhaft mehr als 1 m/s und vorzugsweise mehr als 2 m/s. Es kann insbesondere eine hohe Flexibilität erreicht werden.

Ferner wird vorgeschlagen, dass zumindest die erste Aktoreinheit dazu vorgesehen ist, zumindest das erste Heizelement auf einer Linie zu bewegen, die insbesondere auf einer Geraden liegt. Unter einer "Linie" soll insbesondere ein eindimensionales Objekt verstanden werden. Vorzugsweise liegt die Linie in zumindest einer Ebene. Insbesondere ist die Linie als geschlossene Linie, insbesondere Kreislinie, vorzugsweise als offene Linie, ausgebildet. Vorzugsweise weist eine Linie zwei Endpunkte auf, die auf geradem und/oder geschwungenem Weg verbunden sind. Darunter, dass ein Heizelement "auf" der Linie bewegt wird, soll insbesondere verstanden werden, dass ein Abstand zumindest eines Fixpunkts, vorzugsweise eines Mittelpunkts, des Heizelements zur Linie, insbesondere zumindest während einer Bewegung, zumindest im Wesentlichen gleich ist und vorzugsweise kleiner ist als 5 cm, insbesondere kleiner ist als 1 cm, vorteilhaft kleiner ist als 5 mm, vorzugsweise kleiner ist als 1 mm. Unter einem Abstand eines Punkts zu einer Linie soll insbesondere ein Minimum der Abstände aller Punkte der Linie zu dem Punkt verstanden werden. Darunter, dass eine Größe zumindest im "Wesentlichen gleich" ist, soll insbesondere verstanden werden, dass ein Minimum der Größe mindestens 40 %, insbesondere mindestens 60 %, vorteilhaft mindestens 85 %, vorzugsweise mindesten 95 %, eines Maximums der Größe entspricht. Es kann insbesondere eine einfache Steuerung erreicht werden.

Weiterhin wird vorgeschlagen, dass zumindest die zweite Aktoreinheit dazu vorgesehen ist, zumindest die erste Trägereinheit auf einer Linie zu bewegen, die insbesondere auf einer Geraden liegt. Es kann insbesondere eine einfache Steuerung erreicht werden.

Ferner wird vorgeschlagen, dass die Linie, auf der zumindest das erste Heizelement bezüglich der ersten Trägereinheit bewegt wird zumindest im Wesentlichen senkrecht zu der Linie orientiert ist, auf der zumindest die erste Trägereinheit bezüglich dem Grundkörper bewegt wird. Darunter, dass zwei Linien "im Wesentlichen senkrecht" zueinander orientiert sind, soll insbesondere verstanden werden, dass an beliebigen Schnittpunkten der Linien, die durch Verschiebung der Linien erzeugt werden können, ein Schnittwinkel der Linien weniger als 30°, insbesondere weniger als 15°, vorteilhaft weniger als 5°, vorzugsweise weniger als 1° von 90° abweicht. Es kann insbesondere einfach eine große Fläche abgedeckt werden.

Weiterhin wird vorgeschlagen, dass die Kochfeldvorrichtung gemäß der Erfindung zumindest ein zweites Heizelement aufweist, das an die erste Trägereinheit montiert ist und die vorzugsweise dazu vorgesehen ist, zumindest von der ersten Aktoreinheit bewegt zu werden. Vorzugsweise ist das zweite Heizelement gleichartig, insbesondere mit gleichem Durchmesser und/oder gleicher Form, zu dem ersten Heizelement ausgebildet. Es kann insbesondere eine einfache Steuerung und/oder eine Bauteilersparnis und/oder eine hohe Heizleistung erreicht werden.

Vorteilhaft grenzen zumindest die zwei Heizelemente zumindest in einem Betriebszustand, insbesondere in jedem Betriebszustand, aneinander an. Darunter, dass zwei Heizelemente "aneinander angrenzen", soll insbesondere verstanden werden, dass ein Abstand der Heizelemente, insbesondere ein Zwischenraum zwischen den Heizelementen, kleiner ist als 10 %, insbesondere kleiner ist als 5 %, vorzugsweise kleiner ist als 2 %, einer Breite der Heizelemente. Vorzugsweise berühren sich die Heizelemente. Es kann insbesondere eine große, gleichmäßig, insbesondere lückenlos, beheizbare Heizzone bereitgestellt und somit ein Komfort gesteigert werden.

Weiterhin wird vorgeschlagen, dass die Kochfeldvorrichtung zumindest eine erste Sensoreinheit aufweist, die dazu vorgesehen ist, eine Größe, eine Position, eine Form und/oder eine Begrenzung von Gargeschirr, das vorzugsweise auf die Kochfeldplatte aufgestellt ist, zu detektieren. Vorteilhaft ist die Steuereinheit dazu vorgesehen, eine Bewegung zumindest des ersten Heizelements in Abhängigkeit von Sensorwerten der Sensoreinheit zu steuern. Unter einer Sensoreinheit soll insbesondere eine Einheit verstanden werden, die eine zu messende Größe in eine elektrische Größe, insbesondere eine elektrisch auswertbare Größe, vorteilhaft eine elektrische Stromstärke und/oder eine elektrische Spannung, vorzugsweise ein elektrisches, insbesondere digitales, Signal, wandelt. Insbesondere ist die Sensoreinheit zumindest teilweise an dem ersten Heizelement angeordnet. Vorteilhaft ist die Sensoreinheit zumindest teilweise von dem ersten Heizelement gebildet. Insbesondere dient eine induktive Kenngröße eines als Induktionsheizelement ausgebildeten Heizelements als Sensorwert. Insbesondere ist die Steuereinheit dazu vorgesehen, das Heizelement zu einem positionierten Gargeschirr hinzubewegen. Es kann insbesondere eine flexible Heizzone erreicht werden.

Vorteilhaft ist die Steuereinheit dazu vorgesehen, zumindest eine Bewegung des ersten Heizelements während zumindest eines Heizvorgangs zu steuern. Insbesondere ist die Steuereinheit dazu vorgesehen, durch die Aktoreinheit zumindest das erste Heizelement unter der Heizzone derart, insbesondere periodisch, zu verfahren, dass es die Heizzone, zumindest teilweise überstreicht. Es kann insbesondere eine gleichmäßige Wärmeverteilung erreicht werden.

Weiterhin wird vorgeschlagen, dass zumindest die zwei Heizelemente dazu vorgesehen sind, in zumindest einem Betriebszustand eine gemeinsame Heizzone zu beheizen. Unter einer "Heizzone" soll insbesondere ein Bereich, vorteilhaft ein Bereich auf der Kochfeldplatte, verstanden werden, auf dem Gargeschirr aufgestellt werden kann und dem durch einen Bediener eine Heizleistung zugeordnet werden kann. Insbesondere wird die Heizzone durch ein Gargeschirr bestimmt. Darunter, dass zwei Heizelement eine "gemeinsame" Heizzone beheizen, soll insbesondere verstanden werden, dass zwei Heizelemente ein selbes Gargeschirr beheizen, das in der Heizzone angeordnet ist. Es kann insbesondere ein erhöhter Komfort erreicht werden, da eine größere Fläche beheizt werden kann und/oder mit einer größeren Leistung geheizt werden kann.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein erfindungsgemäßes Kochfeld in einer schematischen Ansicht von oben und
- Fig. 2: ein weiteres erfindungsgemäßes Kochfeld in einer schematischen Ansicht von oben.

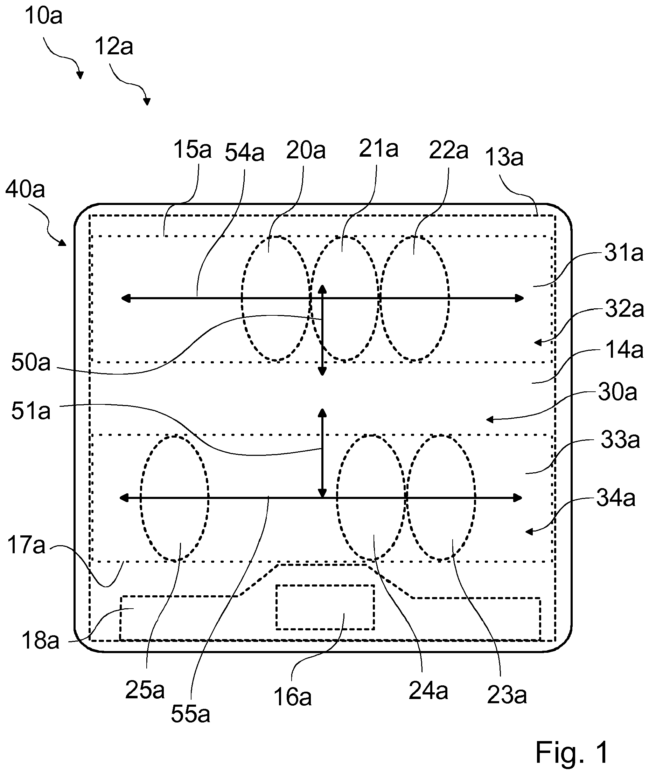

Figur 1 zeigt ein als Induktionskochfeld ausgebildetes Kochfeld 10a mit einer als Induktionskochfeldvorrichtung ausgebildeten Kochfeldvorrichtung 12a. Die Kochfeldvorrichtung 12a weist einen als Schale ausgebildeten Grundkörper 13a, in dem Kochfeldelektronik angeordnet ist, und eine als Glaskeramikplatte ausgebildete Kochfeldplatte 14a auf, die den Grundkörper 13a nach oben abschließt. Die Kochfeldvorrichtung 12a weist sechs Heizelemente 20a, 21a, 22a, 23a, 24a, 25a auf. Die Kochfeldvorrichtung 12a weist zwei Trägereinheiten 31a, 33a auf. Auf jeder der Trägereinheiten 31a, 33a sind drei Heizelemente 20a, 21a, 22a, bzw. 23a, 24a, 25a montiert. Die Heizelemente 20a, 21a, 22a, 23a, 24a, 25a weisen eine elliptische Form auf. Eine Länge der Heizelemente 20a, 21a, 22a, 23a, 24a, 25a beträgt 20 cm und eine Breite beträgt 10 cm. Jede der Trägereinheiten 33a weist eine erste Aktoreinheit 32a bzw. 34a auf, die dazu vorgesehen ist, die jeweils auf der Trägereinheit 33a montierten Heizelemente 20a, 21a, 22a, bzw. 23a, 24a, 25a bezüglich der Trägereinheit 31a, 33a und somit gegenüber dem Grundkörper 13a zu bewegen. Weiterhin weist die Kochfeldvorrichtung 12a eine zweite Aktoreinheit 30a auf, die dazu vorgesehen ist, die Trägereinheiten 31a, 33a und somit die Heizelemente 20a, 21a, 22a, 23a, 24a, 25a bezüglich dem Grundkörper 13a zu bewegen. Die Aktoreinheit 30a ist dazu vorgesehen, die Trägereinheiten 31a, 33a samt der Heizelemente 20a, 21a, 22a, 23a, 24a, 25a entlang von Linien 50a, 51a zu bewegen, die parallel zu Längsrichtungen der Heizelemente 20a, 21a, 22a, 23a, 24a, 25a und auf Geraden liegen. Die Linien 50a, 51 liegen dabei parallel zueinander. Weiterhin weist die Kochfeldvorrichtung 12a eine Steuereinheit 16a und eine Bedienerschnittstelle 18a auf. Die Bedienerschnittstelle 18a ist dazu vorgesehen, einem Bediener eine Eingabe von Heizleistungen zu ermöglichen und aktive Heizzonen auf einer Anzeigeeinheit auszugeben. Die Steuereinheit 16a ist dazu vorgesehen, eingegebene und Heizzonen zugeordnete Heizleistungen den Heizelementen 20a, 21a, 22a, 23a, 24a, 25a zuzuordnen und Bewegungen der Heizelemente 20a, 21a, 22a, 23a, 24a, 25a zu steuern. Die Aktoreinheiten 32a bzw. 34a sind jeweils dazu vorgesehen, die Heizelemente 20a, 21a, 22a, bzw. 23a, 24a, 25a teilweise auf einer selben Linie 54a bzw. 55a bezüglich der jeweiligen Trägereinheit 31a, 33a zu bewegen. Die Linien 54a, 55a bewegen sich bei einer Bewegung der Trägereinheiten 31a, 33a mit den Trägereinheiten 31a, 33a mit. Die Linien 54a, 55a liegen auf Geraden. Die Linien 54a, 55a, auf denen die Heizelemente 20a, 21a, 22a, 23a, 24a, 25a bezüglich der Trägereinheiten 33a beweglich sind, sind senkrecht zu den Linien 50a, 51a orientiert, auf denen die Trägereinheiten 33a bezüglich des Grundkörpers 13a bewegt werden können. Die Trägereinheiten 33a sind als Platten ausgebildet. Alternativ sind auch Ausgestaltungen denkbar, in denen die Trägereinheiten 31a, 33a als Leisten oder Ähnliches ausgebildete sind.

Die Heizelemente 20a, 21a, 22a, 23a, 24a, 25a sind als Induktionsheizelemente ausgebildet. Ferner weist die Kochfeldvorrichtung 12a eine Sensoreinheit 40a auf, die dazu vorgesehen ist, Positionen und Begrenzungen von auf der Kochfeldplatte 14a aufgestelltem Gargeschirr zu detektieren. Die Sensoreinheit 40a ist von den als Induktionsheizelementen ausgebildeten Heizelementen 20a, 21a, 22a, 23a, 24a, 25a gebildet. Durch Bewegung der Heizelemente 20a, 21a, 22a, 23a, 24a, 25a wird die Kochfeldplatte 14a auf darauf stehende Gargeschirre abgetastet. Befindet sich ein Gargeschirr über einem der Heizelemente 20a, 21a, 22a, 23a, 24a, 25a ist eine Induktivität des Heizelements 20a, 21a, 22a, 23a, 24a, 25a erhöht, wobei eine Änderung der Induktivität an einem Rand eines Gargeschirrs besonders stark ist. Die Steuereinheit 16a ist dazu vorgesehen, eine Bewegung der Heizelemente 20a, 21a, 22a, 23a, 24a, 25a in Abhängigkeit von Sensorwerten der Sensoreinheit 40a zu steuern. In Abhängigkeit von den Sensorwerten der Sensoreinheit 40a, die auf Größe, Position und Form von aufgestelltem Gargeschirr schließen lassen, und von eingegebenen Heizleistungen legt die Steuereinheit 16a eine Anzahl von Heizelementen 20a, 21a, 22a, 23a, 24a, 25a fest, die das Gargeschirr bzw. die Gargeschirre beheizen. Bei kleinen Leistungen oder kleinen Gargeschirren wird ein einzelnes Heizelement 20a, 21a, 22a, 23a, 24a, 25a verwendet. Steht das Gargeschirr an einer Position, die von zwei Heizelementen 20a, 21a, 22a, 23a, 24a, 25a, die auf parallelen Linien 54a, 55a bewegt werden, gleichermaßen erreichbar ist, beheizen beide Heizelemente 20a, 21a, 22a, 23a, 24a, 25a das Gargeschirr gemeinsam. Bei großen Gargeschirren bzw. hohen angeforderten Heizleistungen werden zwei oder mehr Heizelemente 20a, 21a, 22a, 23a, 24a, 25a verwendet, um eine Heizzone gemeinsam zu beheizen. Es gibt Betriebszustände, beispielsweise, wenn zwei Heizelemente 20a, 21a, 22a, 23a, 24a, 25a eine gemeinsame Heizzone beheizen, in denen diese aneinander angrenzen. Die Steuereinheit 16a ist dazu vorgesehen, eine Bewegung der darunter angeordneten Heizelemente 20a, 21a, 22a, 23a, 24a, 25a während eines Heizvorgangs zu steuern. Zu Beginn eines Heizvorgangs steuert die Steuereinheit 16a die Aktoreinheiten 30a, 32a, 34a um die Heizelemente 20a, 21a, 22a, 23a, 24a, 25a unter auf der Kochfeldplatte 14a aufgestelltem Gargeschirr zu zentrieren. Ist ein Gargeschirr größer als ein darunter angeordnetes Heizelement 20a, 21a, 22a, 23a, 24a, 25a ist die Steuereinheit 16a dazu vorgesehen, die Aktoreinheiten 30a, 32a, 34a anzusteuern, damit diese die darunter angeordneten Heizelemente 20a, 21a, 22a, 23a, unter dem Gargeschirr auf der entsprechenden Linie 54a, 55a hin- und herbewegt, um eine Heizleistungsverteilung zu erreichen. Die Aktoreinheiten 32a, 34a gemäß der Erfindung sind dazu vorgesehen, die Heizelemente 20a, 21a, 22a, bzw. 23a, 24a, 25a unabhängig voneinander zu bewegen. Die Aktoreinheit 30a ist dazu vorgesehen, die Trägereinheiten 31a, 33a unabhängig voneinander zu bewegen.

Die Aktoreinheiten 30a, 32a, 34a sind jeweils von einem Satz Rollen gebildet, auf denen jeweils die zwei Trägereinheiten 31a, 33a bzw. die drei Heizelemente 20a, 21a, 22a, bzw. 23a, 24a, 25a gelagert sind. Die Sätze von Rollen weisen nebeneinander angeordnete Rollen auf. Einige der Rollen sind dazu vorgesehen, von Motoren angetrieben zu werden und so die darauf gelagerten Heizelemente 20a, 21a, 22a, 23a, 24a, 25a zu bewegen. Die Heizelemente 20a, 21a, 22a, 23a, 24a, 25a sind in ihrer Bewegung durch Rahmen 15a, 17a geführt. Die Rahmen 15a, 17a sind an den Trägereinheiten 31a, 33a montiert.

Die Heizelemente 20a, 21a, 22a, 23a, 24a, 25a sind flexibel einsetzbar. Beispielsweise können die Heizelemente 20a, 21a, 22a dazu verwendet werden, gemeinsam ein großes Gargeschirr zu beheizen, während die Heizelemente 23a, 24a dazu verwendet werden, ein mittelgroßes Gargeschirr zu beheizen und das Heizelement 25a ein kleines Gargeschirr beheizt. Alternativ kann, besonders bei niedrigen Heizleistungen, ein einzelnes Heizelement 20a, 21a, 22a, 23a, 24a, 25a dazu verwendet werden, ein großes Gargeschirr zu beheizen, wobei sich das verwendete Heizelement 20a, 21a, 22a, 23a, 24a, 25a unter dem Gargeschirr hin- und herbewegt.

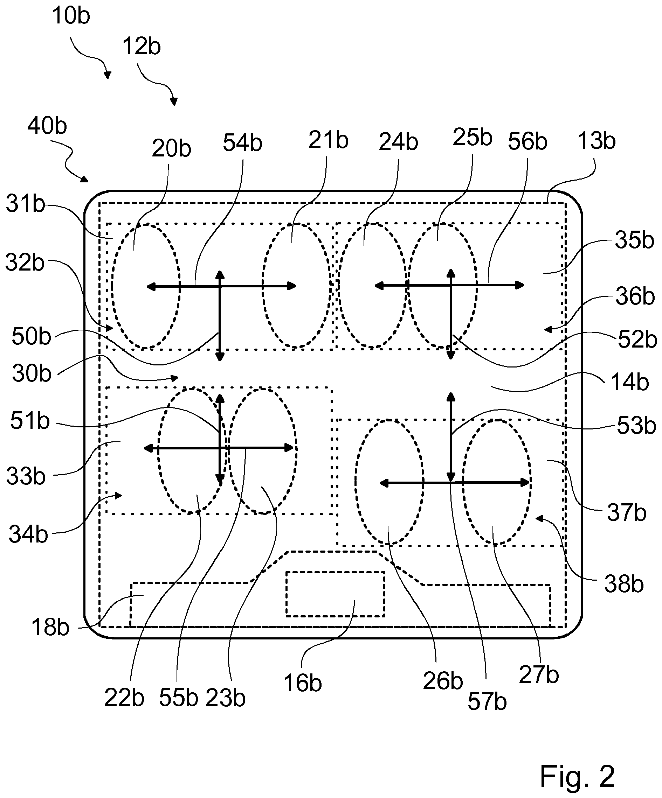

In der Figur 2 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des anderen Ausführungsbeispiels, insbesondere der Figur 1, verwiesen werden kann. Zur Unterscheidung der Ausführungsbeispiele ist der Buchstabe a in den Bezugszeichen des Ausführungsbeispiels in den Figur 1 durch den Buchstaben b in den Bezugszeichen des Ausführungsbeispiels der Figur 2 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figur 1 verwiesen werden.

Figur 2 zeigt eine Ausgestaltung einer Kochfeldvorrichtung 12b, die in Abwandlung von Figur 1 vier Trägereinheiten 31b, 33b, 35b, 37b aufweist, die jeweils zwei Heizelemente 20b, 21b, bzw. 22b, 23b, bzw. 24b, 25b, bzw. 26b, 27b tragen. Eine Aktoreinheit 30b ist dazu vorgesehen, die Trägereinheiten 31b, 33b, 35b, 37b unabhängig voneinander bezügliche eines Grundkörpers 13b zu bewegen. Die Aktoreinheit 30b ist dazu vorgesehen, die Heizelemente 20b, 21b, bzw. 22b, 23b, bzw. 24b, 25b, bzw. 26b, 27b auf Linien 50b, 51b, 52b, 53b, die auf Geraden liegen, zu verschieben, die parallel zu Längsrichtungen der Heizelemente 20b, 21b, 22b, 23b, 24b, 25b, 26b, 27b liegen. Die Trägereinheiten 31b, 33b, 35b, 37b weisen jeweils eine Aktoreinheit 32b, 34b, 36b, 38b auf, die dazu vorgesehen sind, die Heizelemente 20b, 21b, bzw. 22b, 23b, bzw. 24b, 25b, bzw. 26b, 27b auf Linien 54b, 55b, 56b, 57b, die auf Geraden liegen, bezüglich der jeweiligen Trägereinheit 31b, 33b, 35b, 37b zu bewegen. Die zwei Heizelemente 20b, 21b, bzw. 22b, 23b, bzw. 24b, 25b, bzw. 26b, 27b sind dazu vorgesehen, paarweise auf selben Linien 54b, 55b, 56b, 57b bezüglich der jeweiligen Trägereinheit 31b, 33b, 35b, 37b bewegt zu werden. Die Linien 54b, 55b, 56b, 57b liegen parallel zueinander. Durch Überlagerung von Bewegungen durch die Aktoreinheiten 30b und 32b bzw. 34b bzw. 36b bzw. 38b können vielfältige Bewegungsmuster, insbesondere kreisende Bewegungen der Heizelemente 20b, 21b, 22b, 23b, 24b, 25b, 26b, 27b, erzeugt werden.

Durch die beschriebenen Ausgestaltungen kann eine Ausnutzung von großen Teilen der Kochfeldplatte 14 als Heizzone ermöglicht werden. Die Linien 50, 51, 52 ,53, 54, 55, 56, 57 beziehen sich jeweils auf Mittelpunkte der Heizelemente 20, 21, 22, 23, 24, 25, 26, 27 bzw. der Trägereinheiten 31, 33, 35, 37.

**Bezugszeichen**

| | | | |
|---|---|---|---|
| 10 | Kochfeld | 50 | Linie |
| 12 | Kochfeldvorrichtung | 51 | Linie |
| 13 | Grundkörper | 52 | Linie |
| 14 | Kochfeldplatte | 53 | Linie |
| 15 | Rahmen | 54 | Linie |
| 16 | Steuereinheit | 55 | Linie |
| 17 | Rahmen | 56 | Linie |
| 18 | Bedienerschnittstelle | 57 | Linie |
| 20 | Heizelement | | |
| 21 | Heizelement | | |
| 22 | Heizelement | | |
| 23 | Heizelement | | |
| 24 | Heizelement | | |
| 25 | Heizelement | | |
| 26 | Heizelement | | |
| 27 | Heizelement | | |
| 30 | Aktoreinheit | | |
| 31 | Trägereinheit | | |
| 32 | Aktoreinheit | | |
| 33 | Trägereinheit | | |
| 34 | Aktoreinheit | | |
| 35 | Trägereinheit | | |
| 36 | Aktoreinheit | | |
| 37 | Trägereinheit | | |
| 38 | Aktoreinheit | | |
| 40 | Sensoreinheit | | |

## Patentansprüche

1. Kochfeldvorrichtung, insbesondere Induktionskochfeldvorrichtung, mit zumindest einem Grundkörper (13a-b), zumindest einer ersten Trägereinheit (31a-b, 33a-b, 35b, 37b), zumindest einem ersten Heizelement (20a-25a; 20b-27b), das an die erste Trägereinheit (31a-b, 33a-b, 35b, 37b) montiert ist, zumindest einer ersten Aktoreinheit (32a-b, 34a-b, 36b, 38b), die dazu vorgesehen ist, zumindest das erste Heizelement (20a-25a; 20b-27b) bezüglich der ersten Trägereinheit (31a-b, 33a-b, 35b, 37b) zu bewegen, mit einer Steuereinheit (16a-b) und mit zumindest einer zweiten Aktoreinheit (30a-b), die dazu vorgesehen ist, zumindest die erste Trägereinheit (31a-b, 33a-b, 35b, 37b) bezüglich des Grundkörpers (13a-b) zu bewegen, **gekennzeichnet durch** zumindest ein zweites Heizelement (20a-25a; 20b-27b), das an die erste Trägereinheit (31a-b, 33a-b, 35b, 37b) montiert ist und dazu vorgesehen ist, zumindest von der ersten Aktoreinheit (32a-b, 34a-b, 36b, 38b) unabhängig von dem ersten Heizelement (20a-25a; 20b-27b) bewegt zu werden.

2. Kochfeldvorrichtung nach Anspruch 1, **dadurch gekennzeichnet, dass** zumindest die erste Aktoreinheit (32a-b, 34a-b, 36b, 38b) dazu vorgesehen ist, zumindest das erste Heizelement (20a-25a; 20b-27b) auf einer Linie (54a-b, 55ab, 56b, 57b) zu bewegen.

3. Kochfeldvorrichtung nach einem der vorhergehenden Ansprüche, **dadurch gekennzeichnet, dass** die zweite Aktoreinheit (30a-b) dazu vorgesehen ist, zumindest die erste Trägereinheit (31a-b, 33a-b, 35b, 37b) auf einer Linie (50a-b, 51a-b, 52b, 53b) zu bewegen.

4. Kochfeldvorrichtung nach den Ansprüchen 2 und 3, **dadurch gekennzeichnet, dass** die Linie (54a-b, 55a-b, 56b, 57b), auf der zumindest das erste Heizelement (20a-25a; 20b-27b) bezüglich der ersten Trägereinheit (31a-b, 33ab, 35b, 37b) bewegt wird zumindest im Wesentlichen senkrecht zu der Linie (50a-b, 51a-b, 52b, 53b) orientiert ist, auf der zumindest die erste Trägereinheit (31a-b, 33a-b, 35b, 37b) bezüglich des Grundkörpers (13a-b) bewegt wird.

5. Kochfeldvorrichtung nach einem der vorhergehenden Ansprüche, **dadurch gekennzeichnet, dass** zumindest die zwei Heizelemente (20a-25a; 20b-27b) zumindest in einem Betriebszustand aneinander angrenzen.

6. Kochfeldvorrichtung nach einem der vorhergehenden Ansprüche, **gekennzeichnet durch** zumindest eine erste Sensoreinheit (40a-b), die dazu vorgesehen ist, eine Größe, eine Position eine Form und/oder eine Begrenzung von Kochgeschirr zu detektieren.

7. Kochfeldvorrichtung nach einem der vorhergehenden Ansprüche, **dadurch gekennzeichnet, dass** die Steuereinheit (16a-b) dazu vorgesehen ist, zumindest eine Bewegung des ersten Heizelements (20a-25a; 20b-27b) während zumindest eines Heizvorgangs zu steuern.

8. Kochfeldvorrichtung nach einem der vorhergehenden Ansprüche, **dadurch gekennzeichnet, dass** zumindest die zwei Heizelemente (20a-25a; 20b-27b) in zumindest einem Betriebszustand dazu vorgesehen sind, eine gemeinsame Heizzone zu beheizen.

9. Kochfeldplatte mit einer Kochfeldvorrichtung (12a-b) nach einem der vorhergehenden Ansprüche.

## Claims

1. Hotplate device, in particular induction hotplate device, having at least one base body (13a-b), at least one first support unit (31a-b, 33a-b, 35b, 37b), at least one first heating element (20a-25a; 20b-27b), which is mounted on the first support unit (31a-b, 33a-b, 35b, 37b), at least one first actuator unit (32a-b, 34a-b, 36b, 38b) which is provided to move at least the first heating element (20a-25a; 20b-27b) with respect to the first support unit (31a-b, 33a-b, 35b, 37b), having a control unit (16a-b) and having at least one second actuator unit (30a-b), which is provided to move at least the first support unit (31a-b, 33a-b, 35b, 37b) with respect to the base body (13a-b), **characterised by** at least one second heating element (20a-25a; 20b-27b), which is mounted on the first support unit (31a-b, 33a-b, 35b, 37b) and is provided to be moved at least by the first actuator unit (32a-b, 34a-b, 36b, 38b) independently of the first heating element (20a-25a, 20b-27b).

2. Hotplate device according to claim 1, **characterised in that** at least the first actuator unit (32a-b, 34a-b, 36b, 38b) is provided to move at least the first heating element (20a-25a; 20b-27b) on a line (54a-b, 55a-b, 56b, 57b).

3. Hotplate device according to one of the preceding claims, **characterised in that** the second actuator unit (30a-b) is provided to move at least the first support unit (31a-b, 33a-b, 35b, 37b) on a line (50a-b, 51a-b, 52b, 53b).

4. Hotplate device according to claims 2 and 3, **characterised in that** the line (54a-b, 55a-b, 56b, 57b) on which at least the first heating element (20a-25a; 20b-27b) is moved with respect to the first support unit (31a-b, 33a-b, 35b, 37b) is oriented at least substantially at right angles to the line (50a-b, 51a-b, 52b, 53b) on which at least the first support unit (31a-b, 33a-b, 35b, 37b) is moved with respect to the base body (13a-b).

5. Hotplate device according to one of the preceding claims, **characterised in that** at least the two heating elements (20a-25a; 20b-27b) adjoin one another at least in one operating state.

6. Hotplate device according to one of the preceding claims, **characterised by** at least one first sensor unit (40a-b), which is provided to detect a size, a position, a shape and/or a limitation of cookware.

7. Hotplate device according to one of the preceding claims, **characterised in that** the control unit (16a-b) is provided to control at least one movement of the first heating element (20a-25a; 20b-27b) during at least one heating process.

8. Hotplate device according to one of the preceding claims, **characterised in that** in at least one operating state at least the two heating elements (20a-25a; 20b-27b) are provided to a heat a shared heating zone.

9. Hotplate with a hotplate device (12a-b) according to one of the preceding claims.

## Revendications

1. Dispositif de table de cuisson, notamment dispositif de table de cuisson à induction, comprenant au moins un corps de base (13a - b), au moins une première unité de support (31a - b, 33a - b, 35b, 37b), au moins un premier élément chauffant (20a - 25a ; 20b - 27b) qui est monté sur la première unité de support (31a - b, 33a - b, 35b, 37b), au moins une première unité d'actionneur (32a - b, 34a - b, 36b, 38b) qui est ménagée pour déplacer au moins le premier élément chauffant (20a - 25a ; 20b - 27b) par rapport à la première unité de support (31a - b, 33a - b, 35b, 37b), comprenant une unité de commande (16a - b) et comprenant au moins une deuxième unité d'actionneur (30a - b) qui est ménagée pour déplacer au moins la première unité de support (31a - b, 33a - b, 35b, 37b) par rapport au corps de base (13a - b), **caractérisé par** au moins un deuxième élément chauffant (20a - 25a ; 20b - 27b) qui est monté sur la première unité de support (31a - b, 33a - b, 35b, 37b) et est ménagé pour être déplacé au moins par la première unité d'actionneur (32a - b, 34a - b, 36b, 38b) indépendamment du premier élément chauffant (20a - 25a ; 20b - 27b).

2. Dispositif de table de cuisson selon la revendication 1, **caractérisé en ce qu'**au moins la première unité d'actionneur (32a - b, 34a - b, 36b, 38b) est ménagée pour déplacer au moins le premier élément chauffant (20a - 25a ; 20b - 27b) sur une ligne (54a - b, 55a - b, 56b, 57b).

3. Dispositif de table de cuisson selon l'une quelconque des revendications précédentes, **caractérisé en ce que** la deuxième unité d'actionneur (30a - b) est ménagée pour déplacer au moins la première unité de support (31a - b, 33a - b, 35b, 37b) sur une ligne (50a - b, 51a - b, 52b, 53b).

4. Dispositif de table de cuisson selon les revendications 2 et 3, **caractérisé en ce que** la ligne (54a - b, 55a -b, 56b, 57b), sur laquelle au moins le premier élément chauffant (20a - 25a ; 20b - 27b) est déplacé par rapport à la première unité de support (31a - b, 33a - b, 35b, 37b), est orientée au moins essentiellement perpendiculairement à la ligne (50a - b, 51a - b, 52b, 53b) sur laquelle au moins la première unité de support (31a - b, 33a - b, 35b, 37b) est déplacée par rapport au corps de base (13a - b).

5. Dispositif de table de cuisson selon l'une quelconque des revendications précédentes, **caractérisé en ce qu'**au moins les deux éléments chauffants (20a - 25a ; 20b - 27b) sont adjacents les uns aux autres au moins dans un état de fonctionnement.

6. Dispositif de table de cuisson selon l'une quelconque des revendications précédentes, **caractérisé par** au moins une première unité de capteurs (40a - b) qui est ménagée pour détecter une grandeur, une position, une forme et/ou une délimitation de récipient de cuisson.

7. Dispositif de table de cuisson selon l'une quelconque des revendications précédentes, **caractérisé en ce que** l'unité de commande (16a - b) est ménagée pour commander au moins un mouvement du premier élément chauffant (20a - 25a ; 20b - 27b) pendant au moins une opération de chauffe.

8. Dispositif de table de cuisson selon l'une quelconque des revendications précédentes, **caractérisé en ce qu'**au moins les deux éléments chauffants (20a - 25a ; 20b - 27b), dans au moins un état de fonctionnement, sont ménagés pour chauffer une zone de chauffe commune.

9. Plaque de table de cuisson comprenant un dispositif de table de cuisson (12a - b) selon l'une quelconque des revendications précédentes.
